# EUROPEAN PATENT APPLICATION

(11) **EP 3 364 661 A2**
(43) Date of publication of application: **22.08.2018**
(21) Application number: 18155766.1
(22) Date of filing: 08.02.2018
(51) Int. Cl.: H04N 21/422, H04N 21/45, H04N 21/466, H04N 21/81, H04N 21/414, H04N 21/442, G06F 17/30

(54) **ELECTRONIC DEVICE AND METHOD FOR CONTROLLING THE SAME**

(30) Priority: 20.02.2017 KR 20170022529
(71) Applicant: LG Electronics Inc., Yeongdeungpo-gu Seoul 07336 (KR)
(72) Inventor: JEONG, Gyuhyeok, 06772 Seoul (KR); KIM, Eugene, 06772 Seoul (KR); CHO, Taegil, 06772 Seoul (KR)
(74) Representative: Beyer, Andreas

(57) **Abstract**

The present invention relates to an electronic device and a method for controlling the same, and more particularly, an electronic device having an artificial intelligence function, the electronic device including a microphone configured to collect audio data, and a controller configured to collect the audio data by controlling the microphone in a background state, predict user-preferred audio data by using prestored user log information, decide recommended audio data from the collected audio data based on the prediction result, and output a user interface for providing the decided recommended audio data.

## Description

### BACKGROUND OF THE INVENTION

### 1. Field of the Invention

This specification relates to an electronic device having an artificial intelligence (AI) function, and a method for controlling the same.

### 2. Background of the Invention

Electronic devices may be divided into portable devices and stationary devices according to mobility. Also, the portable electronic devices may be classified into handheld types and vehicle mount types according to whether or not a user can directly carry.

Portable electronic devices have become increasingly more functional. Examples of such functions include data and voice communications, capturing images and video via a camera, recording audio, playing music files via a speaker system, and displaying images and video on a display. Some electronic devices include additional functionality which supports game playing, while other terminals are configured as multimedia players. More recently, electronic devices have been configured to receive broadcast and multicast signals which permit viewing of contents such as videos and television programs.

As it becomes multifunctional, an electronic device can be allowed to capture still images or moving images, play music or video files, play games, receive broadcast and the like, so as to be implemented as an integrated multimedia player.

In the related art, a user had to select or search for a multimedia content that the user desired. Accordingly, there was no way for the user to receive the multimedia content when the user did not know information related to the multimedia content.

Meanwhile, in recent years, with development of sensors that operate in an always-on state, a user's surrounding environment can be detected in real time merely using less power. These sensors can detect in real time information related to the user's surrounding environment even if the user does not directly operate them.

Recently, an artificial intelligence field that enables thinking similar to human intelligence has been dramatically developed based on a machine learning technology. This artificial intelligence can allow machines to replace human actions of manipulating the machines through human minds. Therefore, there are various efforts to utilize the artificial intelligence in various industrial fields.

Accordingly, the present invention proposes a method of providing multimedia contents by utilizing sensors operated in an always-on state and the artificial intelligence, even if a user does not know information related to the multimedia contents.

### SUMMARY OF THE INVENTION

Therefore, an aspect of the detailed description is to provide an electronic device capable of selectively providing information related to audio data that is recommendable to a user among audio data which the user has unintentionally heard, and a method for controlling the same.

A still another object of the present invention is to provide an electronic device capable of recommending audio data suitable for a surrounding situation to a user, and a method for controlling the same.

To achieve these and other advantages and in accordance with the purpose of this specification, as embodied and broadly described herein, there is provided an electronic device, including a microphone configured to collect audio data, and a controller configured to collect the audio data by controlling the microphone in a background state, predict user-preferred audio data by using prestored user log information, decide recommended audio data from the collected audio data based on the prediction result, and output a user interface for providing the decided recommended audio data.

In one embodiment disclosed herein, the user log information may further include at least one of information related to a user's listening frequency with respect to audio data, a user's listening time, and a place where the user's listening is made, and the controller may predict the user-preferred audio data based on at least one of the frequency, time and place information included in the user log information.

In one embodiment disclosed herein, the controller may extract at least part audio data from the collected audio data based on a user input, and decide the recommended audio data from the extracted at least part audio data based on the prediction result.

In one embodiment disclosed herein, the user input may be information related to at least one of a specific location or a specific time.

In one embodiment disclosed herein, the controller may further output on the user interface information related to geographical locations where audio data corresponding to each of the recommended audio data has been collected.

In one embodiment disclosed herein, the controller may output a map image including the geographical locations, as information related to the geographical locations where the audio data has been collected. The controller may decide a reproduction order of the recommended audio data according to a user's drag input when the drag input is applied on the map image.

In one embodiment disclosed herein, the controller may further output information related to collected times of the audio data, respectively, near the collected locations of the audio data corresponding to the respective recommended audio data.

In one embodiment disclosed herein, the controller may predict the user-preferred audio data based on the user log information and a user input, and the user input may be at least one of location information or time information.

In one embodiment disclosed herein, the location information may be information related to a specific area or a user's current location, and the controller may extract, from the collected audio data, audio data associated with a name of an area according to the specific area or the user's current location, or a name of a prominent area located within a preset distance from the area according to the specific area or the user's current location.

In one embodiment disclosed herein, the time information may be information related to a specific time or a detected time of the user input, and the controller extracts, from the collected audio data, audio data associated with a name indicating the specific time or the detected time of the user input, or a name of a surrounding environment that is observable at the specific time or the detected time of the user input.

In one embodiment disclosed herein, the controller may determine whether or not the recommended audio data can be decided from audio data collected at a current location, and output notification information for notifying that the recommended audio data can be provided.

In one embodiment disclosed herein, when a reproduction request for one of the recommended audio data is received, the controller may reproduce the one audio data among the collected audio data with a volume set according to noise around the user.

In one embodiment disclosed herein, the controller may detect the user's status when a user input is applied, and predict the user-preferred audio data based on the user log information and the detection result of the user's status.

In one embodiment disclosed herein, the controller may detect the user's status based on a result of further detecting other persons adjacent to the user. The result of further detecting the other persons may further include a number of other persons located adjacent to the user, genders of the other persons located adjacent to the user, voice volumes of the user and the other persons, and detection results of the number of times of detecting the voices of the user and the other persons and a detection time of each of the voices.

A method for controlling an electronic device according to another embodiment of the present invention may include collecting audio data in a background state, predicting user-preferred audio data from the collected audio data using prestored user log information, deciding recommended audio data from the collected audio data based on the prediction result, and providing the decided recommended audio data through a user interface.

### BRIEF DESCRIPTION OF THE DRAWINGS

In the drawings:
FIG. 1 is a block diagram of an electronic device in accordance with one exemplary embodiment of the present invention;
FIG. 2 is a flowchart illustrating an operation of providing recommended audio data by predicting user-preferred audio data, in an electronic device in accordance with an embodiment of the present invention;
FIG. 3 is a flowchart illustrating an operation of deciding recommended audio data based on a user input and a result of predicting user's preferred audio data, in an electronic device in accordance with an embodiment of the present invention;
FIG. 4 is a flowchart illustrating an operation of predicting user-preferred audio data based on a result of analyzing a user's surrounding situation and user log information, in an electronic device in accordance with an embodiment of the present invention;
FIG. 5 is a conceptual view illustrating an example of recommending audio data to a user according to a surrounding situation, in a mobile terminal according to an embodiment of the present invention;
FIG. 6 is a conceptual view illustrating a method of recommending audio data that the user may like among audio data collected at a specific time and at a specific location, in a mobile terminal according to an embodiment of the present invention;
FIG. 7 is a conceptual view illustrating a method of providing various information related to each of recommended audio data provided to a user in a mobile terminal according to an embodiment of the present invention; and
FIG. 8 is a conceptual view illustrating an example of searching for audio data suitable for a user's current situation and providing the searched audio data as recommended audio data in a mobile terminal according to an embodiment of the present invention.

### DETAILED DESCRIPTION OF THE INVENTION

Description will now be given in detail according to exemplary embodiments disclosed herein, with reference to the accompanying drawings. For the sake of brief description with reference to the drawings, the same or equivalent components may be provided with the same or similar reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity.

In the following description, it is assumed that an electronic device is a mobile terminal 100. However, this is merely assumed for the sake of explanation, and the present invention may be implemented not only in the mobile terminal but also in various devices capable of utilizing artificial intelligence.

The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be connected with the other element or intervening elements may also be present. In contrast, when an element is referred to as being "directly connected with" another element, there are no intervening elements present.

A singular representation may include a plural representation unless it represents a definitely different meaning from the context.

Terms such as "includes" or "has" are used herein and should be understood that they are intended to indicate an existence of features, numbers, steps, functions, several components, or combinations thereof, disclosed in the specification, and it is also understood that greater or fewer features, numbers, steps, functions, several components, or combinations thereof may likewise be utilized.

Mobile terminals presented herein may be implemented using a variety of different types of terminals. Examples of such terminals include cellular phones, smart phones, user equipment, laptop computers, digital broadcast terminals, personal digital assistants (PDAs), portable multimedia players (PMPs), navigators, slate PCs, tablet PCs, ultra books, wearable devices (for example, smart watches, smart glasses, head mounted displays (HMDs)), and the like.

By way of non-limiting example only, further description will be made with reference to particular types of mobile terminals. However, such teachings apply equally to other types of terminals, such as those types noted above. In addition, these teachings may also be applied to stationary terminals such as digital TV, desktop computers, digital signage, and the like.

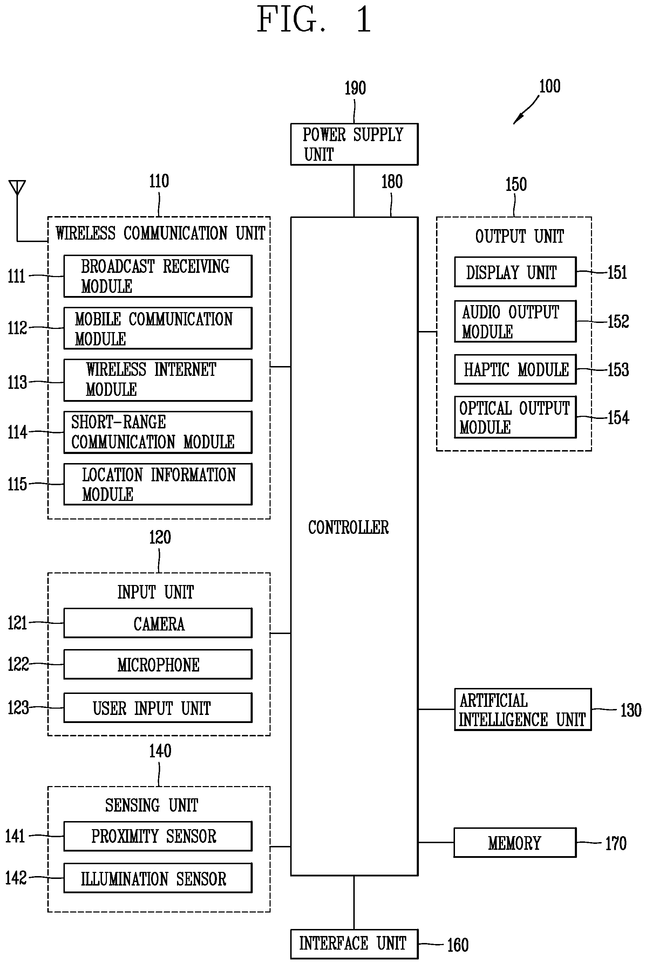

Referring to FIG. 1, FIG. 1 is a block diagram of a mobile terminal 100 according to the present invention.

The mobile terminal 100 may be shown having components such as a wireless communication unit 110, an input unit 120, an artificial intelligence (AI) unit 130, a sensing unit 140, an output unit 150, an interface unit 160, a memory 170, a controller 180, and a power supply unit 190. It is understood that implementing all of the illustrated components is not a requirement, and that greater or fewer components may alternatively be implemented.

In more detail, the wireless communication unit 110 may typically include one or more modules which permit communications such as wireless communications between the mobile terminal 100 and a wireless communication system, communications between the mobile terminal 100 and another mobile terminal, communications between the mobile terminal 100 and an external server. Further, the wireless communication unit 110 may typically include one or more modules which connect the mobile terminal 100 to one or more networks.

The wireless communication unit 110 may include one or more of a broadcast receiving module 111, a mobile communication module 112, a wireless Internet module 113, a short-range communication module 114, and a location information module 115.

The input unit 120 may include a camera 121 or an image input unit for obtaining images or video, a microphone 122, which is one type of audio input device for inputting an audio signal, and a user input unit 123 (for example, a touch key, a mechanical key, and the like) for allowing a user to input information. Data (for example, audio, video, image, and the like) may be obtained by the input unit 120 and may be analyzed and processed according to user commands.

The artificial intelligence unit 130 plays a role of processing information based on an artificial intelligence technology and may include at least one module for performing at least one of learning of information, inference of information, perception of information, and processing of a natural language .

The artificial intelligence unit 130 may use a machine learning technology to execute at least one of learning, inference and processing of a large amount of information (big data), such as information stored in the mobile terminal, surrounding environment information related to the mobile terminal, information stored in a communication-available external storage, etc. And the artificial intelligence unit 130 may predict (or infer) at least one executable operation of the mobile terminal based on the information learned using the machine learning technology, and control the mobile terminal to execute the most feasible operation among the at least one predicted operation.

The machine learning technology is a technology that collects and learns a large amount of information based on at least one algorithm, and determines and predicts information based on the learned information. The learning of information is an operation of grasping characteristics of information, rules and judgment criteria, quantifying a relation between information and information, and predicting new data using the quantified patterns.

Algorithms used by the machine learning technology may be algorithms based on statistics, for example, a decision tree that uses a tree structure type as a prediction model, an artificial neural network that mimics neural network structures and functions of living creatures, genetic programming based on biological evolutionary algorithms, clustering of distributing observed examples to a subset of clusters, a Monte Carlo method of computing function values as probability using randomly-extracted random numbers, and the like.

As one field of the machine learning technology, deep learning is a technology of performing at least one of learning, determining, and processing information using the artificial neural network algorithm. The artificial neural network may have a structure of linking layers and transferring data between the layers. This deep learning technology may be employed to learn vast amounts of information through the artificial neural network using a graphic processing unit (GPU) optimized for parallel computing.

Meanwhile, the artificial intelligence unit 130 may collect (sense, monitor, extract, detect, receive) signals, data and information input or output among components of the mobile terminal, in order to collect vast amounts of information for applying the machine learning technology. Also, the artificial intelligence unit 130 may collect (sense, monitor, extract, detect, receive) data, information and the like stored in an external storage (for example, a cloud server) connected through communication. More specifically, the collection of information may be understood as a term including an operation of sensing information through a sensor, extracting information stored in the memory 170, or receiving information from an external storage through communication.

The artificial intelligence unit 130 may sense information within the mobile terminal, surrounding environment information related to the mobile terminal, and user information through the sensing unit 140. In addition, the artificial intelligence unit 130 may receive broadcast signals and/or broadcast-related information, wireless signals, wireless data, and the like through the wireless communication unit 110. The artificial intelligence unit 130 may also receive image information (or signal), audio information (or signal), data, or user-input information from an input unit.

The artificial intelligence unit 130 may collect vast amounts of information in real time in a background, learn the collected information, process the learned information into an appropriate form of information (for example, knowledge graph, command policy, personalization database, dialog engine, etc.), and store the processed information in the memory 170.

When the operation of the mobile terminal is predicted based on the information learned using the machine learning technology, the artificial intelligence unit 130 may control the components of the mobile terminal to execute the predicted operation or transfer a control command for executing the predicted operation to the controller 180. The controller 180 may then execute the predicted operation by controlling the mobile terminal based on the control command.

Meanwhile, when a specific operation is executed, the artificial intelligence unit 130 may analyze history information indicating the execution of the specific operation through the machine learning technology and execute updating of previously-learned information based on the analyzed information. Accordingly, the artificial intelligence unit 130 can improve accuracy of such information prediction.

Meanwhile, in this specification, the artificial intelligence unit 130 and the controller 180 may be understood as the same component. In this instance, functions executed in the controller 180 described herein may be expressed as being executed in the artificial intelligence unit 130, and the controller 180 may be named as the artificial intelligence unit 130, or conversely the artificial intelligence unit 130 may be referred to as the controller 180.

On the other hand, in this specification, the artificial intelligence unit 130 and the controller 180 may be understood as separate components. In this instance, the artificial intelligence unit 130 and the controller 180 may execute various controls on the mobile terminal through data exchange with each other. The controller 180 may execute at least one function on the mobile terminal or control at least one of the components of the mobile terminal based on results derived from the artificial intelligence unit 130. Furthermore, the artificial intelligence unit 130 may also be operated under the control of the controller 180.

The sensing unit 140 may typically be implemented using one or more sensors configured to sense internal information of the mobile terminal, the surrounding environment of the mobile terminal, user information, and the like. For example, the sensing unit 140 may include at least one of a proximity sensor 141, an illumination sensor 142, a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, camera 121), a microphone 122, a battery gauge, an environment sensor (for example, a barometer, a hygrometer, a thermometer, a radiation detection sensor, a thermal sensor, and a gas sensor, among others), and a chemical sensor (for example, an electronic nose, a health care sensor, a biometric sensor, and the like). The mobile terminal disclosed herein may be configured to utilize information obtained from one or more sensors of the sensing unit 140, and combinations thereof.

The output unit 150 may typically be configured to output various types of information, such as audio, video, tactile output, and the like. The output unit 150 may be shown having at least one of a display unit 151, an audio output module 152, a haptic module 153, and an optical output module 154. The display unit 151 may have an inter-layered structure or an integrated structure with a touch sensor in order to facilitate a touch screen. The touch screen may provide an output interface between the mobile terminal 100 and a user, as well as function as the user input unit 123 which provides an input interface between the mobile terminal 100 and the user.

The interface unit 160 serves as an interface with various types of external devices that can be coupled to the mobile terminal 100. The interface unit 160, for example, may include any of wired or wireless ports, external power supply ports, wired or wireless data ports, memory card ports, ports for connecting a device having an identification module, audio input/output (I/O) ports, video I/O ports, earphone ports, and the like. In some cases, the mobile terminal 100 may perform assorted control functions associated with a connected external device, in response to the external device being connected to the interface unit 160.

The memory 170 is typically implemented to store data to support various functions. The memory 170 may be configured to store application programs or applications executed in the mobile terminal 100, data or instructions for operations of the mobile terminal 100, and data (for example, at least one algorithm information for machine learning, etc.) for operations of the artificial intelligence unit 130. Some of these application programs may be downloaded from an external server via wireless communication. Other application programs may be installed within the mobile terminal 100 at time of manufacturing or shipping (for example, receiving a call, placing a call, receiving a message, sending a message, and the like). Meanwhile, the application programs may be stored in the memory 170 and installed in the mobile terminal 100, and executed by the controller 180 to perform an operation (or function) for the mobile terminal 100.

The controller 180 typically functions to control overall operation of the mobile terminal 100, in addition to the operations associated with the application programs. The controller 180 may provide or process information or functions appropriate for a user by processing signals, data, information and the like, which are input or output by the aforementioned various components, or activating application programs stored in the memory 170.

Also, the controller 180 controls some or all of the components illustrated in FIG. 1A in order to execute an application program that have been stored in the memory 170. In addition, the controller 180 may control at least two of those components included in the mobile terminal to activate the application program. The power supply unit 190 is configured to receive external power or provide internal power in order to supply appropriate power required for operating elements and components included in the mobile terminal 100. The power supply unit 190 may include a battery, and the battery may be configured to be embedded in the terminal body, or configured to be detachable from the terminal body.

At least part of the components may cooperatively operate to implement an operation, a control or a control method of a mobile terminal according to various embodiments disclosed herein. Also, the operation, the control or the control method of the mobile terminal may be implemented on the mobile terminal by an activation of at least one application program stored in the memory 170.

Hereinafter, description will be given in more detail of the aforementioned components with reference to FIG. 1, prior to describing various embodiments implemented through the mobile terminal 100.

First, regarding the wireless communication unit 110, the broadcast receiving module 111 is typically configured to receive a broadcast signal and/or broadcast associated information from an external broadcast managing entity via a broadcast channel. The broadcast channel may include a satellite channel, a terrestrial channel, or both. In some embodiments, two or more broadcast receiving modules 111 may be utilized to facilitate simultaneously receiving of two or more broadcast channels, or to support switching among broadcast channels.

The broadcast managing entity may indicate a server which generates and transmits a broadcast signal and/or broadcast associated information or a server which receives a pre-generated broadcast signal and/or broadcast associated information and sends them to the mobile terminal. The broadcast signal may be implemented as a TV broadcast signal, a radio broadcast signal, and a data broadcast signal, among others. The broadcast signal may further include a data broadcast signal combined with a TV or radio broadcast signal.

The broadcast signal may be encrypted by at least one of technical standards (or broadcasting methods, e.g., ISO, IEC, DVB, ATSC, etc.) for transmitting and receiving a digital broadcast signal. The broadcast receiving module 111 may receive the digital broadcast signal using a method suitable for a technical standard selected from those technical standards.

Examples of broadcast associated information may include information associated with a broadcast channel, a broadcast program, a broadcast service provider, and the like. The broadcast associated information may be provided via a mobile communication network, and received by the mobile communication module 112.

The broadcast associated information may be implemented in various formats. For instance, broadcast associated information may include Electronic Program Guide (EPG) of Digital Multimedia Broadcasting (DMB), Electronic Service Guide (ESG) of Digital Video Broadcast-Handheld (DVB-H), and the like. The broadcast signal and/or the broadcast related information received through the broadcast receiving module 111 may be stored in the memory 170.

The mobile communication module 112 can transmit and/or receive wireless signals to and from one or more network entities. Typical examples of a network entity include a base station, an external mobile terminal, a server, and the like. Such network entities form part of a mobile communication network, which is constructed according to technical standards or communication methods for mobile communications (for example, Global System for Mobile Communication (GSM), Code Division Multi Access (CDMA), CDMA2000(Code Division Multi Access 2000), EV-DO(Enhanced Voice-Data Optimized or Enhanced Voice-Data Only), Wideband CDMA (WCDMA), High Speed Downlink Packet access (HSDPA), HSUPA (High Speed Uplink Packet Access), Long Term Evolution (LTE), LTE-A (Long Term Evolution-Advanced), and the like).

Examples of wireless signals transmitted and/or received via the mobile communication module 112 include audio call signals, video (telephony) call signals, or various formats of data to support communication of text and multimedia messages.

The wireless Internet module 113 is configured to facilitate wireless Internet access. This module may be internally or externally coupled to the mobile terminal 100. The wireless Internet module 113 may transmit and/or receive wireless signals via communication networks according to wireless Internet technologies.

Examples of such wireless Internet access include Wireless LAN (WLAN), Wireless Fidelity (Wi-Fi), Wi-Fi Direct, Digital Living Network Alliance (DLNA), Wireless Broadband (WiBro), Worldwide Interoperability for Microwave Access (WiMAX), High Speed Downlink Packet Access (HSDPA), HSUPA (High Speed Uplink Packet Access), Long Term Evolution (LTE), LTE-A(Long Term Evolution-Advanced), and the like. The wireless Internet module 113 may transmit/receive data according to one or more of such wireless Internet technologies, and other Internet technologies as well.

In some embodiments, when the wireless Internet access is implemented according to, for example, WiBro, HSDPA, HSUPA, GSM, CDMA, WCDMA, LTE, LTE-A and the like, as part of a mobile communication network, the wireless Internet module 113 performs such wireless Internet access. As such, the Internet module 113 may cooperate with, or function as, the mobile communication module 112.

The short-range communication module 114 is configured to facilitate short-range communications. Suitable technologies for implementing such short-range communications include BLUETOOTH™, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB (Wireless Universal Serial Bus), and the like. The short-range communication module 114 in general supports wireless communications between the mobile terminal 100 and a wireless communication system, communications between the mobile terminal 100 and another mobile terminal 100, or communications between the mobile terminal and a network where another mobile terminal 100 (or an external server) is located, via wireless area networks. One example of the wireless area networks is a wireless personal area networks.

Here, another mobile terminal (which may be configured similarly to mobile terminal 100) may be a wearable device, for example, a smart watch, a smart glass or a head mounted display (HMD), which is able to exchange data with the mobile terminal 100 (or otherwise cooperate with the mobile terminal 100). The short-range communication module 114 may sense or recognize the wearable device, and permit communication between the wearable device and the mobile terminal 100. In addition, when the sensed wearable device is a device which is authenticated to communicate with the mobile terminal 100, the controller 180, for example, may cause transmission of at least part of data processed in the mobile terminal 100 to the wearable device via the short-range communication module 114. Hence, a user of the wearable device may use the data processed in the mobile terminal 100 on the wearable device. For example, when a call is received in the mobile terminal 100, the user may answer the call using the wearable device. Also, when a message is received in the mobile terminal 100, the user can check the received message using the wearable device.

The location information module 115 is generally configured to detect, calculate, derive or otherwise identify a position (or current position) of the mobile terminal. As an example, the location information module 115 includes a Global Position System (GPS) module, a Wi-Fi module, or both. For example, when the mobile terminal uses a GPS module, a position of the mobile terminal may be acquired using a signal sent from a GPS satellite. As another example, when the mobile terminal uses the Wi-Fi module, a position of the mobile terminal can be acquired based on information related to a wireless access point (AP) which transmits or receives a wireless signal to or from the Wi-Fi module. If desired, the location information module 115 may alternatively or additionally function with any of the other modules of the wireless communication unit 110 to obtain data related to the position of the mobile terminal. The location information module 115 is a module used for acquiring the position (or the current position) and may not be limited to a module for directly calculating or acquiring the position of the mobile terminal.

The input unit 120 may be configured to permit various types of inputs (information or signals) to the mobile terminal 100. Examples of such inputs include audio, image, video, data, and user input. Image and video input is often obtained using one or more cameras 121. Such cameras 121 may process image frames of still pictures or video obtained by image sensors in a video or image capture mode. The processed image frames can be displayed on the display unit 151 or stored in memory 170. Meanwhile, the cameras 121 may be arranged in a matrix configuration to permit a plurality of images having various angles or focal points to be input to the mobile terminal 100. Also, the cameras 121 may be located in a stereoscopic arrangement to acquire left and right images for implementing a stereoscopic image.

The microphone 122 processes an external audio signal into electric audio (sound) data. The processed audio data can be used in various manners according to a function (or an application program) being executed in the mobile terminal 100.

If desired, the microphone 122 may include assorted noise removing algorithms to remove unwanted noise generated in the course of receiving the external audio signal. The user input unit 123 is a component that permits input by a user. Such user input may enable the controller 180 to control operation of the mobile terminal 100 when information is input through the user input unit 123. The user input unit 123 may include one or more of a mechanical input element (for example, a mechanical key, a button located on a front and/or rear surface or a side surface of the mobile terminal 100, a dome switch, a jog wheel, a jog switch, and the like), or a touch-sensitive input element, among others. As one example, the touch-sensitive input element may be a virtual key, a soft key or a visual key, which is displayed on a touch screen through software processing, or a touch key which is located on the mobile terminal at a location that is other than the touch screen. On the other hand, the virtual key or the visual key may be displayed on the touch screen in various shapes, for example, graphic, text, icon, video, or a combination thereof.

The sensing unit 140 is generally configured to sense one or more of internal information of the mobile terminal, surrounding environment information of the mobile terminal, user information, or the like, and generate a corresponding sensing signal. The controller 180 generally cooperates with the sending unit 140 to control operation of the mobile terminal 100 or execute data processing, a function or an operation associated with an application program installed in the mobile terminal based on the sensing signal. The sensing unit 140 may be implemented using any of a variety of sensors, some of which will now be described in more detail.

The proximity sensor 141 refers to a sensor to sense presence or absence of an object approaching a surface, or an object located near a surface, by using an electromagnetic field, infrared rays, or the like without a mechanical contact. The proximity sensor 141 may be arranged at an inner region of the mobile terminal covered by the touch screen, or near the touch screen.

The proximity sensor 141, for example, may include any of a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and the like. When the touch screen is implemented as a capacitance type, the proximity sensor 141 can sense proximity of a pointer relative to the touch screen by changes of an electromagnetic field, which is responsive to an approach of an object with conductivity. In this case, the touch screen (touch sensor) may also be categorized as a proximity sensor.

The term "proximity touch" will often be referred to herein to denote the scenario in which a pointer is positioned to be proximate to the touch screen without contacting the touch screen. The term "contact touch" will often be referred to herein to denote the scenario in which a pointer makes physical contact with the touch screen. For the position corresponding to the proximity touch of the pointer relative to the touch screen, such position will correspond to a position where the pointer is perpendicular to the touch screen. The proximity sensor 141 may sense proximity touch, and proximity touch patterns (for example, distance, direction, speed, time, position, moving status, and the like). In general, controller 180 processes data corresponding to proximity touches and proximity touch patterns sensed by the proximity sensor 141, and cause output of visual information on the touch screen. In addition, the controller 180 can control the mobile terminal 100 to execute different operations or process different data (or information) according to whether a touch with respect to a point on the touch screen is either a proximity touch or a contact touch.

A touch sensor can sense a touch (or a touch input) applied to the touch screen, such as display unit 151, using any of a variety of touch methods. Examples of such touch methods include a resistive type, a capacitive type, an infrared type, and a magnetic field type, among others.

As one example, the touch sensor may be configured to convert changes of pressure applied to a specific part of the display unit 151, or convert capacitance occurring at a specific part of the display unit 151, into electric input signals. The touch sensor may also be configured to sense not only a touched position and a touched region, but also touch pressure and/or touch capacitance. A touch object is generally used to apply a touch input to the touch sensor. Examples of typical touch objects include a finger, a touch pen, a stylus pen, a pointer, or the like.

When a touch input is sensed by a touch sensor, corresponding signals may be transmitted to a touch controller. The touch controller may process the received signals, and then transmit corresponding data to the controller 180. Accordingly, the controller 180 may sense which region of the display unit 151 has been touched. Here, the touch controller may be a component separate from the controller 180, the controller 180, and combinations thereof.

Meanwhile, the controller 180 may execute the same or different controls according to a type of touch object that touches the touch screen or a touch key provided in addition to the touch screen. Whether to execute the same or different control according to the object which provides a touch input may be decided based on a current operating state of the mobile terminal 100 or a currently executed application program, for example.

The touch sensor and the proximity sensor may be implemented individually, or in combination, to sense various types of touches. Such touches includes a short (or tap) touch, a long touch, a multi-touch, a drag touch, a flick touch, a pinch-in touch, a pinch-out touch, a swipe touch, a hovering touch, and the like.

If desired, an ultrasonic sensor may be implemented to recognize position information relating to a touch object using ultrasonic waves. The controller 180, for example, may calculate a position of a wave generation source based on information sensed by an illumination sensor and a plurality of ultrasonic sensors. Since light is much faster than ultrasonic waves, the time for which the light reaches the optical sensor is much shorter than the time for which the ultrasonic wave reaches the ultrasonic sensor. The position of the wave generation source may be calculated using this fact. For instance, the position of the wave generation source may be calculated using the time difference from the time that the ultrasonic wave reaches the sensor based on the light as a reference signal.

The camera 121, which has been depicted as a component of the input unit 120, typically includes at least one a camera sensor (CCD, CMOS etc.), a photo sensor (or image sensors), and a laser sensor.

Implementing the camera 121 with a laser sensor may allow detection of a touch of a physical object with respect to a 3D stereoscopic image. The photo sensor may be laminated on, or overlapped with, the display device. The photo sensor may be configured to scan movement of the physical object in proximity to the touch screen. In more detail, the photo sensor may include photo diodes and transistors at rows and columns to scan content received at the photo sensor using an electrical signal which changes according to the quantity of applied light. Namely, the photo sensor may calculate the coordinates of the physical object according to variation of light to thus obtain position information of the physical object.

The display unit 151 is generally configured to output information processed in the mobile terminal 100. For example, the display unit 151 may display execution screen information of an application program executing at the mobile terminal 100 or user interface (UI) and graphic user interface (GUI) information in response to the execution screen information.

Also, the display unit 151 may be implemented as a stereoscopic display unit for displaying stereoscopic images.

A typical stereoscopic display unit may employ a stereoscopic display scheme such as a stereoscopic scheme (a glass scheme), an auto-stereoscopic scheme (glassless scheme), a projection scheme (holographic scheme), or the like.

The audio output module 152 is generally configured to output audio data. Such audio data may be obtained from any of a number of different sources, such that the audio data may be received from the wireless communication unit 110 or may have been stored in the memory 170. The audio data may be output during modes such as a signal reception mode, a call mode, a record mode, a voice recognition mode, a broadcast reception mode, and the like. The audio output module 152 can provide audible output related to a particular function (e.g., a call signal reception sound, a message reception sound, etc.) performed by the mobile terminal 100. The audio output module 152 may also be implemented as a receiver, a speaker, a buzzer, or the like.

A haptic module 153 can be configured to generate various tactile effects that a user feels, perceive, or otherwise experience. A typical example of a tactile effect generated by the haptic module 153 is vibration. The strength, pattern and the like of the vibration generated by the haptic module 153 can be controlled by user selection or setting by the controller. For example, the haptic module 153 may output different vibrations in a combining manner or a sequential manner.

Besides vibration, the haptic module 153 can generate various other tactile effects, including an effect by stimulation such as a pin arrangement vertically moving to contact skin, a spray force or suction force of air through a jet orifice or a suction opening, a touch to the skin, a contact of an electrode, electrostatic force, an effect by reproducing the sense of cold and warmth using an element that can absorb or generate heat, and the like.

The haptic module 153 can also be implemented to allow the user to feel a tactile effect through a muscle sensation such as the user's fingers or arm, as well as transferring the tactile effect through direct contact. Two or more haptic modules 153 may be provided according to the particular configuration of the mobile terminal 100.

An optical output module 154 can output a signal for indicating an event generation using light of a light source. Examples of events generated in the mobile terminal 100 may include message reception, call signal reception, a missed call, an alarm, a schedule notice, an email reception, information reception through an application, and the like.

A signal output by the optical output module 154 may be implemented in such a manner that the mobile terminal emits monochromatic light or light with a plurality of colors. The signal output may be terminated as the mobile terminal senses that a user has checked the generated event, for example.

The interface unit 160 serves as an interface for external devices to be connected with the mobile terminal 100. For example, the interface unit 160 can receive data transmitted from an external device, receive power to transfer to elements and components within the mobile terminal 100, or transmit internal data of the mobile terminal 100 to such external device. The interface unit 160 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating authority of using the mobile terminal 100 and may include a user identity module (UIM), a subscriber identity module (SIM), a universal subscriber identity module (USIM), and the like. In addition, the device having the identification module (also referred to herein as an "identifying device") may take the form of a smart card. Accordingly, the identifying device can be connected with the terminal 100 via the interface unit 160.

When the mobile terminal 100 is connected with an external cradle, the interface unit 160 can serve as a passage to allow power from the cradle to be supplied to the mobile terminal 100 or may serve as a passage to allow various command signals input by the user from the cradle to be transferred to the mobile terminal there through. Various command signals or power input from the cradle may operate as signals for recognizing that the mobile terminal is properly mounted on the cradle. The memory 170 can store programs to support operations of the controller 180 and store input/output data (for example, phonebook, messages, still images, videos, etc.). The memory 170 may store data related to various patterns of vibrations and audio which are output in response to touch inputs on the touch screen.

The memory 170 may include one or more types of storage mediums including a flash memory type, a hard disk type, a solid state disk (SSD) type, a silicon disk drive (SDD) type, a multimedia card micro type, a card-type memory (e.g., SD or DX memory, etc), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, an optical disk, and the like. The mobile terminal 100 may also be operated in relation to a network storage device that performs the storage function of the memory 170 over a network, such as the Internet.

The controller 180 may typically control operations relating to application programs and the general operations of the mobile terminal 100. For example, the controller 180 may set or release a lock state for restricting a user from inputting a control command with respect to applications when a status of the mobile terminal meets a preset condition.

The controller 180 can also perform the controlling and processing associated with voice calls, data communications, video calls, and the like, or perform pattern recognition processing to recognize a handwriting input or a picture drawing input performed on the touch screen as characters or images, respectively. In addition, the controller 180 can control one or a combination of those components in order to implement various exemplary embodiments disclosed herein.

The power supply unit 190 receives external power or provides internal power and supply the appropriate power required for operating respective elements and components included in the mobile terminal 100. The power supply unit 190 may include a battery, which is typically rechargeable or be detachably coupled to the terminal body for charging.

The power supply unit 190 may include a connection port. The connection port may be configured as one example of the interface unit 160 to which an external charger for supplying power to recharge the battery is electrically connected.

As another example, the power supply unit 190 may be configured to recharge the battery in a wireless manner without use of the connection port. In this example, the power supply unit 190 can receive power, transferred from an external wireless power transmitter, using at least one of an inductive coupling method which is based on magnetic induction or a magnetic resonance coupling method which is based on electromagnetic resonance.

Various embodiments described herein may be implemented in a computer-readable medium, a machine-readable medium, or similar medium using, for example, software, hardware, or any combination thereof.

Hereinafter, embodiments related to a control method that can be implemented in a mobile terminal configured as above will be described with reference to the accompanying drawings. It will be apparent to those skilled in the art that the present invention may be embodied in other specific forms without departing from the spirit or essential characteristics thereof.

Meanwhile, the following description will be given under assumption that information is learned based on machine learning or deep learning using the configuration of the controller 180 and audio data is provided using the learned information, but the control may alternatively be executable in the artificial intelligence unit 130. Hereinafter, in the following description, the controller 180 may be replaced with the artificial intelligence unit 130, unless otherwise specified, and the term of the controller 180 will be commonly used for the sake of explanation.

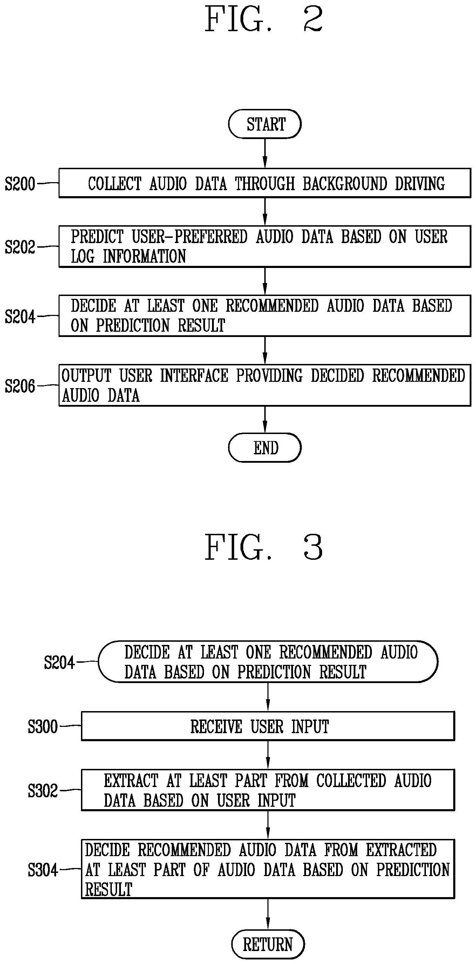

FIG. 2 is a flowchart illustrating an operation of providing recommended audio data by predicting user-preferred audio data, in the mobile terminal 100 according to the embodiment of the present invention.

The controller 180 of the mobile terminal 100 according to the embodiment of the present invention may collect audio data around the mobile terminal 100 using the microphone 122 (S200).

The collected audio data may be utilized as big data for deciding audio data to recommend to the user. In order to collect such audio data, the controller 180 may control the microphone 122 to be maintained in an always-on state such that the microphone 122 can always collect audio data while the mobile terminal 100 is turned on. In addition, the controller 180 may cause the microphone 122 to be driven in a background state so that the user does not recognize the turn-on state of the microphone 122.

Referring back to FIG. 2, the controller 180 may predict audio data preferred by the user (S202). Here, the controller 180 may use prestored user log information for predicting the user-preferred audio data.

The user log information is information in which information related to the user's use of the mobile terminal is recorded on the time basis, and the log information may be recorded according to a time. For example, when the user uses the mobile terminal to reproduce audio data, the user log information may include information related to the audio data reproduced by the user on the time basis, information related to a place when the audio data is reproduced, and the like.

The controller 180 may learn the user log information based on machine learning or deep learning. For example, the controller 180 may analyze, based on the user log information, the frequency of reproduction of each audio data, a location of the mobile terminal 100 when each audio data is reproduced, and a listening time of each audio data, process information related to the analysis result, and generate a probability graph accordingly.

More specifically, the controller 180 may learn attributes of the user-preferred audio data, namely, genre, artist, theme (for example, breakup, love, etc.) and the like of the audio data, based on the processed information through the machine learning or deep learning technology. Hereinafter, the attributes of the user-preferred audio data will be referred to as 'user's audio data tendency.

The audio data may include audio data that the mobile terminal 100 can reproduce in a streaming manner, as well as audio data prestored in the mobile terminal 100.

The controller 180 may predict the user-preferred audio data based on the result of learning the user log information through the machine learning or deep learning.

The controller 180 may also predict the user-preferred audio data based on the learning result, a current position of the user, and a time when a user request for receiving the recommended audio data is received.

The controller 180 may decide at least one audio data of the collected audio data as the recommended audio data, based on the prediction result (S204).

The controller 180 may extract audio data according to the prediction result from the audio data collected in step S200. More specifically, the controller 180 may extract audio data that the user may prefer based on the prediction result obtained based on the machine learning or deep learning.

For example, the controller 180 may extract at least one audio data corresponding to a theme expected to be preferred by the user among the collected audio data. When a theme associated with 'Love' has the highest probability as the theme of the user-preferred audio data predicted based on the user log information among a plurality of themes of the audio data, the controller 180 may extract the audio data having the theme corresponding to 'Love' from the collected audio data.

As another example, the controller 180 may extract audio data having a beat or rhythm corresponding to a genre expected to be preferred by the user among the collected audio data. When audio data having a fast beat or rhythm of a predetermined level or more is predicted as the user-preferred audio data at a current location or time, the controller 180 may extract audio data having fast beats or rhythms that the user is expected to prefer from the collected audio data. Likewise, when audio data having a slow beat or rhythm of a predetermined level or less is predicted as the user-preferred audio data, the controller 180 may extract audio data having slow beats or rhythms that the user is expected to prefer from the collected audio data.

As another example, the controller 180 may extract, from the collected audio data, at least one audio data having a specific music title, artist (artist name), or lyrics that the user is expected to prefer, as recommended audio data. That is, the controller 180 may decide, as recommended audio data, audio data having the same or similar music title as the specific music title, audio data related to the artist, or audio data including words included in the lyrics as a music title or lyrics.

As another example, the controller 180 may decide audio data related to a specific place name, which is predicted to be preferred by the user among the reproducible audio data, as recommended audio data. The specific place name may include a nearby place name including a geographical place corresponding to the specific place name. For example, the specific place name may include a name of another prominent place located within a predetermined distance from a geographical location corresponding to the specific place name.

On the other hand, when at least one recommended audio data is decided in step S204, the controller 180 may output a user interface for providing the decided recommended audio data (S206).

The user interface may be an interface for providing the at least one recommended audio data in a form of a play list. For example, the user interface may include graphic objects related to a playback (reproduction) of a sound source, such as playback, stop, pause, and return, and screen information indicating sound source information included in the play list. Through this interface, the user may select at least one sound source from the play list and start to playback the selected one.

Alternatively, the user interface may be notification information indicating that the recommended audio data is present. In this instance, the user may recognize the presence of the recommended audio data by using the notification information, and further may reproduce the recommended audio data through a manipulation with respect to the notification information.

In addition, the controller 180 may predict the user-preferred audio data based on a user input. The user input may include at least one of location information or time information.

For example, the controller 180 may analyze a voice command based on a voice analysis algorithm when receiving the voice command including a word indicating a current location from the user. Then, the controller 180 may decide the recommended audio data based on the location information included in the analyzed voice command.

That is, when receiving a voice command 'Recommend music to listen to here', the controller 180 may identify based on the command 'Recommend music to listen to here' that the voice command is a request for receiving at least one recommended audio data. Then, the controller 180 may identify based on the word 'here' in the voice command that the voice command is a request for providing the recommended audio data based on the user's current location.

Accordingly, the controller 180 may predict the user-preferred audio data according to the user's current location based on the learned user log information. Then, the controller 180 may decide the recommended audio data based on the prediction result.

Similarly, when the user's voice command includes a word indicating a current time, the controller 180 may decide the recommended audio data based on the current time, i.e., a time when the recommended audio data is requested. Here, the word indicating the current time may be 'now' or 'present'.

Then, the controller 180 may decide the recommended audio data based on a prediction result according to a current time. That is, when the current time is 7:00 pm, the controller 180 may decide a word such as 'evening' or 'afternoon' as a word indicating a specific time zone corresponding to the current time, and decide the recommended audio data based on the prediction result according to the decided word.

The at least one word indicating the specific time zone may be a word related to a natural phenomenon that can be observed at the specific time zone. For example, in the case of 'evening', the controller 180 may predict audio data including words such as 'evening glow' or 'twilight' as the user-preferred audio data in relation to 'evening'. Then, the controller 180 may extract at least part of the collected audio data based on the prediction result, i.e., the words such as 'evening glow', 'twilight', etc. related to the specific time zone, and decide at least one recommended audio data from the extracted at least part.

The foregoing description has given of the example in which the user applies an input including a word indicating a current location or a current time, such as 'here', 'now', etc. Alternatively, the user may directly apply an input that indicates a specific location or a specific time. Similarly to the case where the command related to the current location or the current time is received, the controller 180 may further predict the user-preferred audio data according to the specific location or the specific time, and decide at least one recommended audio data from the reproducible audio data based on the prediction result.

Meanwhile, the controller 180 may extract in advance at least part of the audio data based on at least one of the specific location or the specific time input from the user. In this instance, the step S204 of FIG. 2 may be a process of deciding at least one recommended audio data, based on the prediction result of the user-preferred audio data, from the at least part of the audio data extracted according to the user input.

FIG. 3 is a flowchart illustrating the step S204 of FIG. 2 in more detail.

Referring to FIG. 3, the controller 180 of the mobile terminal 100 according to the embodiment of the present invention may receive a user input requesting for providing recommended audio data (S300). Here, the user input may include information related to at least one of a specific time or specific location.

The controller 180 may extract at least part of the audio data collected in step S200 of FIG. 2 based on the at least one of the specific time or specific location included in the user input.

For this purpose, the controller 180 may further store at least one of information related to a collected time of each of the audio data collected in the step S200 of FIG. 2, and information related to a location of the mobile terminal 100 at the time when each of the collected audio data is collected.

In step S302, the controller 180 may extract audio data collected for the specific time included in the user input from the pre-collected audio data. Or, the controller 180 may extract audio data collected in an area within a preset distance from the specific location included in the user input. Alternatively, the controller 180 may extract audio data collected at the specific time, in an area around the specific location.

The controller 180 may decide at least one recommended audio data from the audio data extracted in step S302 based on the result predicted in step S202 of FIG. 2 (S304). The controller 180 may decide audio data to be recommended to the user based on audio data collected at a specific time point designated by the user or audio data collected at a specific location.

That is, the user may request for the recommended audio data by designating the specific time point or the specific location, so as to check a music that the user has unintentionally heard during the specific time point or near the specific location and listen to the checked music through the mobile terminal 100.

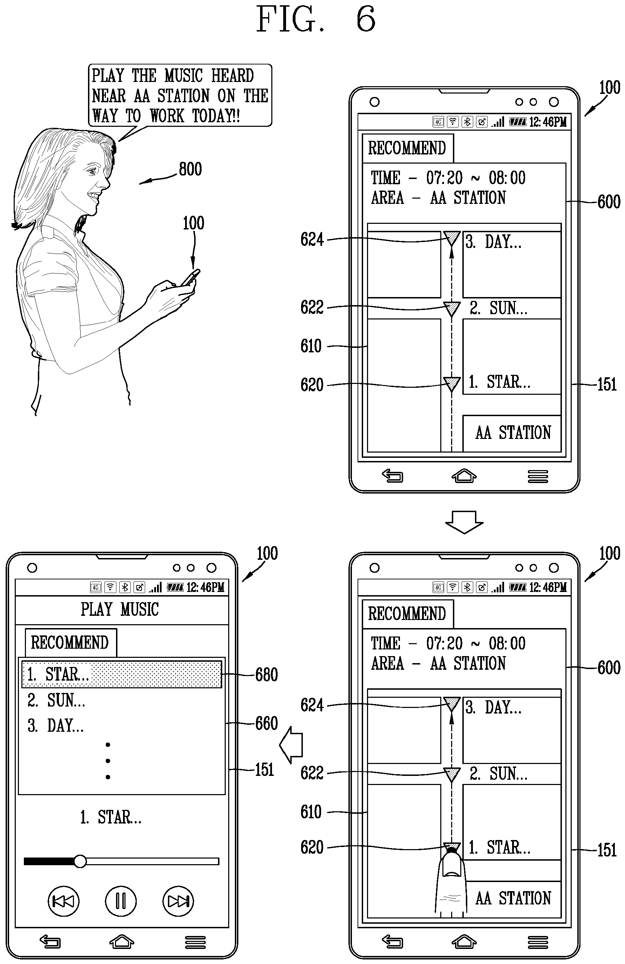

Such user interface for providing the recommended audio data according to the user request when the user designates the specific time or specific location will be described in more detail later with reference to FIG. 6.

Meanwhile, the user interface may further display various information related to the decided at least one recommended audio data. For example, the controller 180 may further display information related to a collected location of audio data associated with each of the recommended audio data, or information related to a collected time of the audio data.

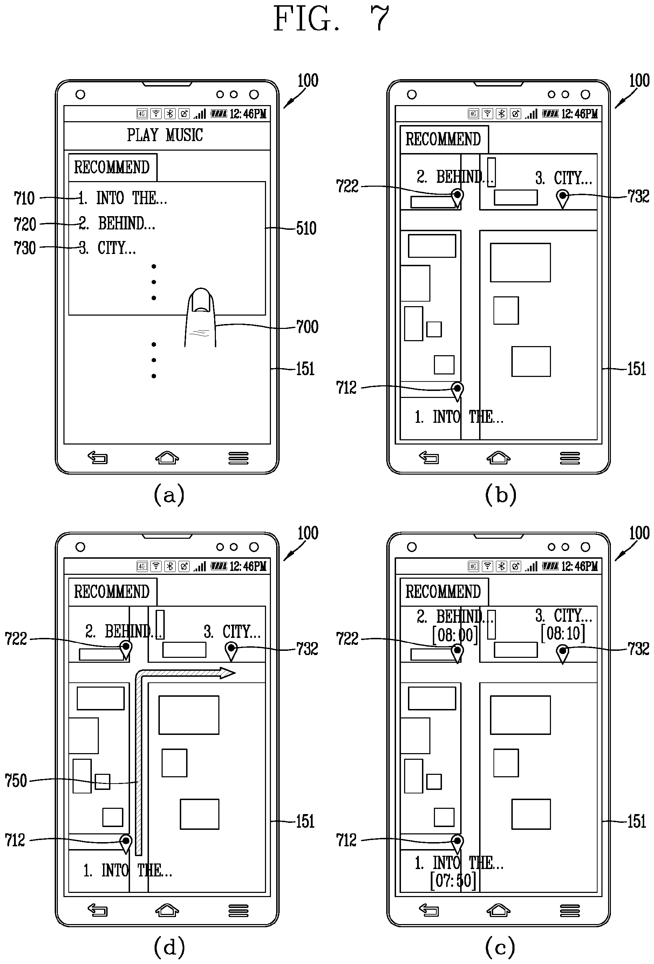

To this end, the controller 180 may further display, on the user interface, a map image showing locations of the audio data associated with the recommended audio data, respectively. Hereinafter, various examples of displaying information regard the audio data associated with the respective recommended audio data will be described in detail with reference to FIG. 7.

Meanwhile, when the recommended audio data is requested to be provided, the mobile terminal 100 according to the embodiment of the present invention may further detect a current situation around the user and decide at least one audio data based on the detection result.

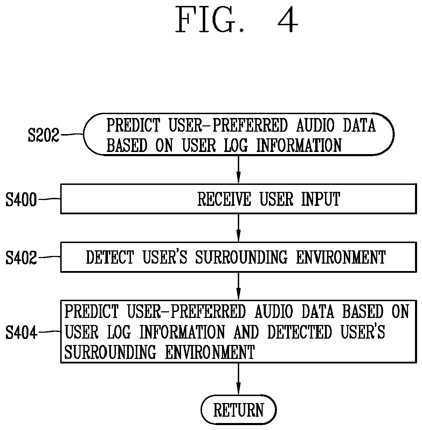

FIG. 4 is a flowchart illustrating the step S202 of FIG. 2 in more detail.

In step S200 of FIG. 2, the controller 180 may detect the user input requesting for providing the recommended audio data after the audio data is collected (S400). The controller 180 may further detect the user's surrounding situation using at least one sensor provided in the sensing unit 140 (S402).

More specifically, the controller 180 may determine a user's surrounding atmosphere based on the user's pupil, breath or pulse. That is, the controller 180 may determine the surrounding atmosphere according to the user's current emotional state, based on information obtained by learning information related to normal movement, respiration or pulse of the user through the machine learning or the deep learning.

For example, when the position of the user's pupil is frequently changed or the respiration or pulse is faster than a preset level, the controller 180 may determine that the user is in an excited state. In this instance, the controller 180 may determine that a current atmosphere around the user is exciting. On the other hand, when the frequency of changing the pupil position of the user is low or the respiration or pulse is slower than the preset level, the controller 180 may determine that the user is in a stable state. Then, the controller 180 may determine that the user's current surrounding atmosphere is quiet.

Meanwhile, when the use's surrounding atmosphere is determined in step S402, the controller 180 may predict the user-preferred audio data based on the user log information and the determined surrounding atmosphere of the user (S404). That is, the controller 180 may predict the user-preferred audio data in the current surrounding atmosphere based on user log information. Then, the controller 180 may go to step S204 of FIG. 2 to decide at least one recommended audio data from the pre-collected audio data based on the prediction result of step S404.

Meanwhile, the user's surrounding situation may be decided according to a result of detecting other persons around the user.

For example, the controller 180 may further detect whether there are other persons around the user. When the other persons are detected, the controller 180 may further detect a voice volume, a number of speaking, a speaking time and the like, from a number of other persons located around the user, other persons' genders, the user's age and other persons' ages, the user's voice and other persons' voices.

The controller 180 may learn the voice volume, the number of speaking, the speaking time and the like, from the number of other persons located around the user, the other persons' genders, the user's age and the other person's ages, the user's voice and the other persons' voices, and determine the surrounding situation based on the learned information through the machine learning or deep learning.

For example, when a large number of other persons are detected around the user, and volumes of detected voices are high or the number of speaking or the speaking time of the user and the other persons is more than a predetermined reference, the controller 180 may determine that the user and the other persons do a group activity. The controller 180 may predict the user-preferred audio data based on the determined surrounding situation of the user, that is, the group activity state such as traveling in group.

On the other hand, when one another person is detected around the user and the detected volume of the voice is low, the controller 180 may determine that the user is talking with the another person in low voices. Furthermore, when the gender of the user is different from the gender of the another person, the controller 180 may determine that the user is in conversation with his or her girlfriend or boyfriend. Accordingly, when receiving the request for providing the recommended audio data from the user, the controller 180 may predict the user-preferred audio data based on the prestored user log information and at least one preset word related to a romantic atmosphere.

Meanwhile, the controller 180 may determine the user's current surrounding situation based on the user's speaking or the another person's speaking. For example, in case where the user requests for the recommended audio data, when a word related to a specific place name a word related to 'travel' is detected from the speaking of the user or the another person, the controller 180 may determine that the user and the another person are currently traveling.

As such, when it is determined that the user is currently 'traveling', the controller 180 may predict the user-preferred audio data based on the prestored user log information, the at least one preset word related to 'travel' or the specific place name.

In the meantime, the controller 180 may further use additional information. For example, the controller 180 may check user's schedule information prestored to determine the user's current status, or further check whether the user's location is changing. Accordingly, the controller 180 may determine the user's status based on the checked schedule information or the user's movement information, and the like.

For example, the controller 180 may check whether the user currently has a schedule related to 'travel' when 'travel' or a specific place name is mentioned from the user or another person around the user. When the user's schedule corresponding to a current time is 'travel', if the user's location is changing, the controller 180 may determine that the user is currently traveling to an area corresponding to the mentioned specific place name.

In this instance, the controller 180 may predict the user-preferred audio data based on the prestored user log information and the currently determined user status, namely, 'travel' or the mentioned specific place name. The controller 180 may then output a user interface including the recommended audio data according to the prediction result.

The foregoing description has been given in detail of the operation of collecting the surrounding audio data in the background driving manner, and deciding at least one recommended audio data from the collected audio data according to the prediction result of the user-preferred audio data based on the user log information, with reference to the plurality of flowcharts.

Hereinafter, description will be given in more detail of examples of outputting user interfaces for providing at least one recommended audio data decided based on the prediction result of the user-preferred audio data in the mobile terminal 100 according to the embodiment of the present invention.

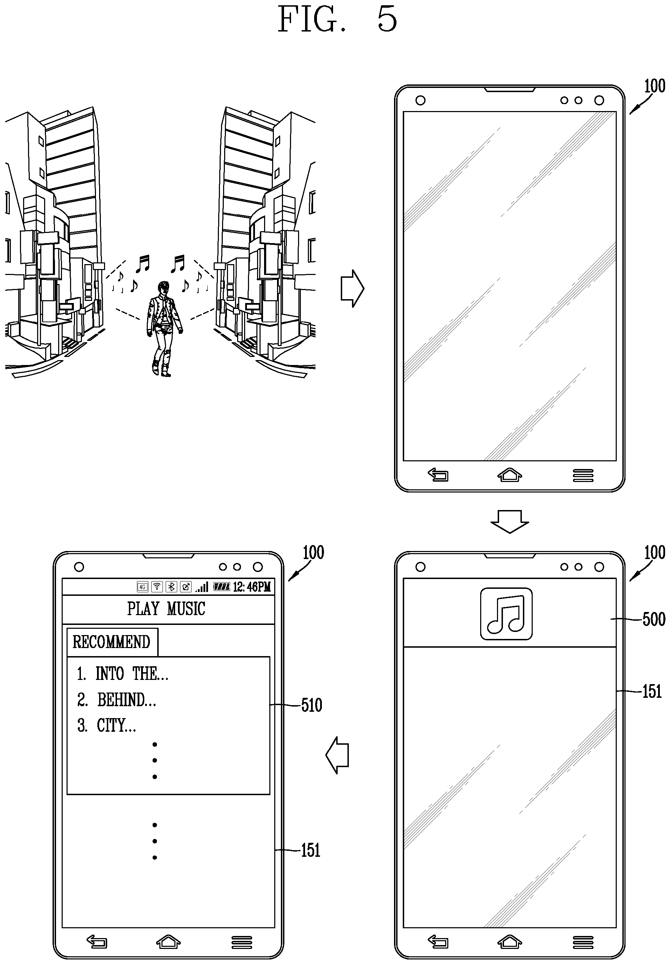

FIG. 5 is an exemplary view illustrating an example of recommending audio data to a user according to a surrounding situation in the mobile terminal 100 according to the embodiment of the present invention.

The mobile terminal 100 according to the embodiment of the present invention, as illustrated in step S200 of FIG. 2, may collect the user's surrounding audio data by driving the microphone 122 in an always-on state. Accordingly, as illustrated in a first drawing of FIG. 5, when the user is moving, audio signals generated around the user may be collected as the audio data through the microphone 122.

Even when the audio data is collected, as illustrated in a second drawing of FIG. 5, any indication may not be output in the mobile terminal 100 according to the embodiment of the present invention. This is because the controller 180 may not inform the state that the audio data is collected by driving the microphone 122 collecting the audio data in the background state.

The controller 180 may also collect information related to a current location related to the mobile terminal 100 when the audio data is collected. The collected location information related to the mobile terminal 100 may be stored to correspond to each of the collected audio data.

The controller 180 may predict the user-preferred audio data from the prestored user log information through the machine learning or deep learning. The controller 180 may decide at least one recommended audio data from the collected audio data according to the prediction result.

When the recommended audio data is extracted by a predetermined amount or more, the controller 180 may output notification information 500 notifying the presence of the recommendable audio data. For example, as illustrated in a third drawing of FIG. 5, when the at least one recommended audio data is decided, the controller 180 may output notification information informing this.

In the output state of the notification information 500, the controller 180 may receive a reproduction request for reproducing the recommended audio data from the user. For example, in the output state of the notification information 500, when the reproduction request for the recommended audio data is received, the controller 180 may output a user interface with the at least one recommended audio data 510, in response to the received user request.

The user interface, as illustrated in a fourth drawing of FIG. 5, may include a play list 510 of the at least one recommended audio data.

The controller 180 may immediately reproduce one of the at least one recommended audio data included in the user interface when the one audio data is selected by the user, or reproduce the at least one recommended audio data in a preset order or randomly.

Hereinafter, a method of providing recommended audio data from audio data collected at a specific time or specific place will be described.

FIG. 6 is a conceptual view illustrating a method of recommending audio data in which a user may be interested among audio data collected at a specific time and a specific location in the mobile terminal 100 according to the embodiment of the present invention.

First, a first drawing of FIG. 6 illustrates an example of detecting a user input for extracting a part of pre-collected audio data. That is, as illustrated in the first drawing of FIG. 6, the controller 180 may receive a voice command 'Let me know the music heard 'on the way to work today' (a specific time) at an AA station (specific location)'.

In this instance, the controller 180 may extract time information 'way to work today' and place information 'AA station' from the voice command based on a voice recognition algorithm.

As illustrated in a first drawing of FIG. 6, when a specific time and a specific location are input, the controller 180 may extract audio data collected for a time (e.g., from 07:20 to 08:00) corresponding to the specific time, namely, 'way to work today' among the pre-collected audio data. And the controller 180 may extract audio data collected within a predetermined distance from the specific location (e.g., AA station).

The controller 180 may decide at least one recommended audio data that may be preferred by the user from the audio data collected at the specific time and the specific location. That is, the controller 180 may learn prestored user log information through the machine learning or deep learning, and predict user-preferred audio data based on the prediction result. Also, the controller 180 may decide at least one recommended audio data that may be preferred by the user based on the prediction result. Therefore, the user can accurately recognize information related to the audio data that the user has vaguely heard.

As illustrated in the fourth drawing of FIG. 5, when the recommended audio data is decided, the controller 180 may display a user interface including the at least one recommended audio data 510. The at least one recommended audio data 510 may be reproduced according to the preset order.

Meanwhile, when the at least one recommended audio data is decided, the controller 180 may display the decided recommended audio data together with the collected location information related to the recommended audio data. That is, as illustrated in a second drawing of FIG. 6, the controller 180 may display the collected location of the audio data related to each of the currently-decided recommended audio data, through the user interface.

Referring to the second drawing of FIG. 6, the controller 180 may decide three recommended audio data from the audio data collected at the specific time and the specific location based on the user input. The controller 180 may display a map image 610 corresponding to the specific location on a user interface 600 based on the received user input.

The controller 180 may display locations 620, 622, and 624 where the audio data related to the recommended audio data is collected on the map image 610. Accordingly, a first location 620 where audio data related to first recommended audio data is collected, a second location 622 where audio data related to second recommended audio data is collected, and a third location 624 where audio data related to third recommended audio data is collected may be displayed, respectively, on the map image 610.

Also, the controller 180 may display a movement track of the mobile terminal 100 on the map image 610. The locations 620, 622, and 624 where each of the audio data is collected may be displayed on the track of the mobile terminal 100, as illustrated in the second drawing of FIG. 6.

Meanwhile, the controller 180 may display the recommended audio data corresponding to each location around the location so that the user can identify the recommended audio data corresponding to the location. Therefore, information related to the first recommended audio data, the second recommended audio data, and the third recommended audio data may be displayed adjacent to the first location 620, the second location 622, and the third location 624, respectively.

Accordingly, the user can recognize information related to audio data that the user has unconsciously heard from each of the locations displayed on the user interface 600. The user can further check the information related to the audio data more accurately by recognizing additional information (location and time) related to the audio data the user has heard.

As illustrated in a third drawing of FIG. 6, when there is a user's selection for any one of the displayed location information, the controller 180, as illustrated in a fourth drawing of FIG. 6, may reproduce one of the recommended audio data corresponding to the selected location information.

Hereinafter, a method of providing additional information related to recommended audio data will be described. FIG. 7 is a conceptual view illustrating a method of providing various types of information related to each of recommended audio data provided to a user, in the mobile terminal 100 according to the embodiment of the present invention.

First, referring to (a) of FIG. 7, a first drawing of FIG. 7 illustrates an example of outputting a user interface including a list 510 of first to third recommended audio data 710, 720 and 730, as audio data that may be preferred by the user.

The controller 180 may detect a user input requesting for additional information related to the recommended audio data 710, 720 and 730. Here, the user input requesting for the additional information related to the recommended audio data may be a touch input 700 applied to the recommended audio data list 510.

As illustrated in (a) of FIG. 7, when the user request for the information related to each of the recommended audio data is received, the controller 180 may output, as the additional information, a collected location and a collected time associated with each of the recommended audio data 710, 720 and 730.

For example, as illustrated in (b) of FIG. 7, the controller 180 may display a map image of one area on the user interface, and display on the map image collected locations 712, 722 and 732 of audio data associated with the respective recommended audio data 710, 720 and 730. And, additional information related to each of the recommended audio data may be output adjacent to each collected location 712, 722 and 732. To this end, the controller 180 may set an area that can include all of the collected locations 712, 722, and 732, and output a map image of the set area as the map image of the one area.

The controller 180 may also display information related to the collected location and the collected time of each audio data.

When information related to each of a plurality of recommended audio data currently decided is output on a map image, the controller 180 may decide the order of reproducing the plurality of recommended audio data based on a user input applied on the map image. For example, as illustrated in (d) of FIG. 7, the controller 180 may decide the reproduction order of the plurality of recommended audio data according to a direction of a drag input 750 applied on the map image. That is, when the drag input 750 is applied as illustrated in (d) of FIG. 7, the controller 180 may decide the order of the locations as the order of the first location 712, the second location 722, and the third location 732 according to the applied direction of the drag input 750. The controller 180 may reproduce each recommended audio data in the order of the first recommended audio data 710, the second recommended audio data 720, and the third recommended audio data 730 according to the decided order of the locations 712, 722 and 732.

### [Example of providing recommended audio data according to place]

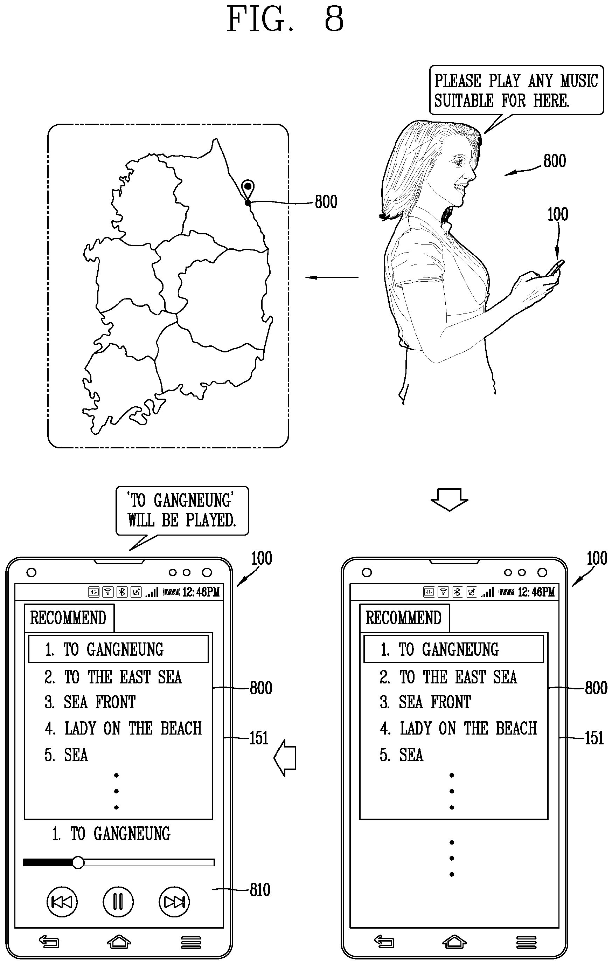

Hereinafter, a method of providing audio data suitable for a user's surrounding situation will be described. FIG. 8 is an exemplary view illustrating an example of searching for audio data suitable for a user's current situation and providing the searched audio data as recommended audio data in the mobile terminal 100 according to the embodiment of the present invention.

The controller 180 may receive a user input requesting for the recommended audio data at a current location from the user. For example, as illustrated in a first drawing of FIG. 8, when the user inputs a voice command 'Play (Recommend) any music suitable for here', the controller 180 may analyze the voice command based on a voice analysis algorithm, and determine that the voice command is a request for audio data suitable for the user's current location according to the analysis result.

The controller 180 may predict user-preferred audio data based on current location information and user log information. For example, as illustrated in a left side of a first drawing of FIG. 8, when the user's current location 800 is near a beach, the controller 180 may predict the user's preferred audio data based on a place 800 where the user is currently located, namely, 'Sea' or 'Seashore'.

The current location information may include a location with the user's previous visit history and a location without the user's previous visit history. When there is the user's previous visit history, the controller 180 may provide audio data that the user has heard at the previous visit as recommended audio data. On the other hand, when there is no user's previous visit history, the controller 180 may predict audio data that may be preferred by the user based on the user log information learned through the machine learning or the deep learning, and provide the predicted audio data. That is, the present invention can predict and provide the audio data that may be preferred by the user even in a place without a previous visit history.

In addition, the controller 180 may predict the user-preferred audio data based on a specific place name or a name of a prominent area among adjacent areas according to specific location-related information or information related to the user's current location. That is, as illustrated in a first drawing of FIG. 8, when the user is located on the east coast 800 of the Republic of Korea, the controller 180 may predict audio data that may be preferred by the user based on a word such as as' East Coast', 'Sea', 'Beach' or the like.

The controller 180 may extract audio data that may be preferred to the user from big data stored in an external server, based on the machine learning or deep learning. Here, the big data is audio data stored in a communication-available external server.

More specifically, the controller 180 may extract at least one audio data that may be preferred by the user from the big data, based on the machine learning or the deep learning. For example, the controller 180 may extract at least a part including 'East Coast', 'Sea', 'Beach', and 'Gangneung' from the big data stored in the external server, and decide at least one audio data that may be preferred by the user.

As illustrated in a second drawing given at a lower right side of FIG. 8, the controller 180 may output the user interface 800 including the list of the decided recommended audio data. And, as illustrated in a fourth drawing given at a lower left side of FIG. 8, the controller 180 may reproduce the recommended audio data provided through the user interface in a preset order or randomly.

Meanwhile, the foregoing description has been given of the controller 180 deciding the recommended audio data using the pre-collected audio data. However, a volume of currently reproduced audio data may be changed based on audio data detected around the user.

For example, the controller 180 may detect noise volume (decibel: db) detected through the microphone 122. The controller 180 may set a volume of audio data such that the audio data is reproduced with a volume higher than the detected noise volume by a predetermined level or more. The controller 180 may set a maximum value for the volume of the audio data that can be automatically adjusted. When the volume control over the maximum value is required due to the noise volume detected around the user, the controller 180 may output notification information notifying the requirement to the user.

In addition, the controller 180 may detect noise around the user and output cancelling noise for cancelling the detected noise. Noise with a predetermined volume, such as white noise, may be eliminated using the cancelling noise, and the controller 180 may further decide the volume of the reproduced audio data by more reflecting the volume of the cancelling noise.

The present invention can be implemented as computer-readable codes in a program-recorded medium. The computer-readable medium may include all types of recording devices each storing data readable by a computer system. Examples of such computer-readable media may include hard disk drive (HDD), solid state disk (SSD), silicon disk drive (SDD), ROM, RAM, CD-ROM, magnetic tape, floppy disk, optical data storage element and the like. Also, the computer-readable medium may also be implemented as a format of carrier wave (e.g., transmission via an Internet). The computer may include the controller 180 of the terminal. Therefore, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims, or equivalents of such metes and bounds are therefore intended to be embraced by the appended claims.

## Claims

1. An electronic device, comprising:
a display (151);
a memory (170);
a microphone (122); and
a controller (180) configured to:
control the microphone (122) to receive audio data in a background state of the electronic device;
identify at least one first audio content item included in the received audio data and store information of the identified at least one first audio content in the memory;
retrieve activity log information from the memory related to the at least one first audio content item;
generate a recommendation for at least one second audio content item based on the retrieved activity log information and the at least one first audio content item; and
control the display (151) to display a user interface comprising the generated recommendation.

2. The device of claim 1, wherein the activity log information corresponds to audio output activity at the electronic device of at least one second audio content item.

3. The device of claim 1, wherein the activity log information corresponds to location information of the electronic device.

4. The device of claim 1 to 3, wherein the recommendation for the at least one second audio content item is generated based on an attribute of the at least one second audio content item matching to a corresponding attribute of the at least one first audio content item.

5. The device of claim 4, wherein the matching attribute of the at least one second audio content item and the at least one first audio content item is a same genre, artist, or theme of audio content.

6. The device of claim 1 to 4, wherein the retrieved activity log information related to the at least one first audio content item comprises at least information of when the at least one first audio content item was reproduced at the device, a location of the device when the at least one first audio content item was reproduced at the device, a frequency of reproduction of the at least one first audio content item at the device, or a duration of reproduction of the at least one first audio content item at the device.

7. The device of claim 1 to 4, wherein the controller (180) is further configured to control the display (151) to the generated recommendation in the form of a playlist to which the at least one second audio content item is added.

8. The device of claim 1 to 4, wherein the controller (180) is further configured to use a prediction model based on the activity log information to select the at least one second audio content item from a plurality of content items to generate the recommendation, wherein the at least one second audio content item is predicted by the prediction model as a highest preference content item among the plurality of content items.

9. A method of providing recommendation based on received audio data at an electronic device, the method comprising:
receiving audio data via a microphone in a background state of the electronic device;
identifying at least one first audio content item included in the audio data and storing information of the identified at least one first audio content;
retrieving stored activity log information related to the at least one first audio content item;
generating a recommendation for at least one second audio content item based on the retrieved activity log information and the at least one first audio content item; and
displaying a user interface comprising the generated recommendation.

10. An electronic device, comprising:
a display (151);
a memory (170);
a location sensor configured to sense a location of the electronic device;
a microphone (122); and
a controller (180) configured to:
control the microphone (122) to receive audio data in a background state of the electronic device;
identify at least one first audio content item included in the received audio data based on audio content identification information stored in the memory (170);
receive location information via the location sensor, the location information to be associated with the identified at least one first audio content item;
generate recommendation information based on the location information associated with the identified at least one first audio content item; and
control the display (151) to display a user interface comprising the generated recommendation.

11. The device of claim 10, wherein the controller (180) is further configured to generate the recommendation information in response to a request for a recommendation specifying a particular location information of the device.

12. The device of claim 10, wherein the controller (180) is further configured to generate the recommendation information in response to a request for a recommendation specifying a particular time, wherein the specified particular time is associated with a time the audio data is received.

13. The device of claim 10 to 12, wherein the controller (180) is further configured to control the display (151) to display a map comprising at least one indicator associated with the received location information.

14. The device of claim 10 to 12, wherein the generated recommendation information comprises a second audio content item and the controller (180) is further configured to use a prediction model based on the location information and the at least one first audio content item to select the at least one second audio content item from a plurality of content items to generate the recommendation, wherein the at least one second audio content item is predicted by the prediction model as a highest preference content item among the plurality of content items.

15. The device of claim 10 to 12, wherein the controller (180) is further configured to:
determine a location of the received audio data with respect to a particular travel path of the device; and
control the display (151) to display a map comprising the location of the received audio data with respect to the particular travel path.
